# EUROPEAN PATENT APPLICATION

(11) **EP 4 629 239 A1**
(43) Date of publication of application: **08.10.2025**
(21) Application number: 24167976.0
(22) Date of filing: 01.04.2024
(51) Int. Cl.: G10L 25/30, G10L 25/48

(54) **SYSTEMS AND METHODS FOR CONTEXTUAL SCENE ANALYSIS**

(71) Applicant: Epona AI Labs Ltd, Kinsale, Cork P17 X319 (IE)
(72) Inventor: Neff, Flaithrí, Kinsale, Cork P17X319 (IE)
(74) Representative: Gillespie, Richard

(57) **Abstract**

The present disclosure is directed towards systems and methods of processing audio information for a vehicular automation system. The method comprises obtaining a context of a VAS; obtaining one or more audio data streams from one or more audio sensors; extracting an audio feature from the one or more audio data streams; processing the audio feature with a neural network and a vector space model to determine the relevance of the audio feature, wherein: the vector space model comprises a Human Audio Perception Model, HAPM; the HAPM is configured to mimic how an audio signal is perceived and processed by a human; and the method comprises using the HAPM to adjust the relevance of the feature based on the context of the VAS.

## Description

### Field:

The present application is directed towards providing systems and methods for generating Acoustic Intelligence which is suitable for use with Vehicular Automation Systems (VASs). As such, the systems and methods discussed in this disclosure are preferably for use with a vehicle to control, or to assist in the control, of the vehicle. Such systems are referred to in this disclosure as VASs.

In the present disclosure, an Acoustic Intelligence System (AIS) is a system configured to receive and process acoustic information and provide an output to a VAS which is suitable for use by the VAS for the control of a vehicle.

### Background:

Vehicular automation has emerged as an area of great interest. It is clear that the use, deployment, and integration of systems supporting vehicular automation will continue to increase. Indeed, such systems are becoming increasingly important and there is a continuing need to increase their accuracy and speed to improve their safety.

At least one factor in a VAS that safely reduces the need for human intervention lies in the accuracy of the sensors employed. In this disclosure, 'sensors' refers to a sensor, sensor system, or sensor suite used to provide sensory data to a VAS. These sensors serve as crucial "perception" technologies, enabling a VAS to perceive surroundings and navigate their environment with minimal or no human oversight and intervention.

At present VASs predominantly rely on line-of-sight sensors which include visual, optical, and electromagnetic sensor suites, such as cameras, LiDAR, or radar. However, line-of sight sensors are restricted to detecting line-of-sight data. As a result, such sensors can only detect hazards in their direct visual path. Thus, the data gathered by line-of-sight sensors is inherently restricted by, and vulnerable to, blind spots. In particular, a line-of-sight sensor cannot obtain data from around a corner or behind an obstacle. Consequently, a VAS should not solely use the data provided by such sensor suites as it is insufficient to safely complete accurate navigation tasks. This is especially the case in environments shared with humans and other moving artificial systems.

Thus, this over-dependence on line-of-sight sensors and data has resulted in VASs that operate without critical data. This over-dependence can have serious consequences for manufacturers, developers, and end-users. In particular, there is an ongoing risk with VASs now in use that hazards obscured by obstacles, blind spots, or adverse weather or lighting conditions will remain undetected. Such sensory limitations significantly hinder VASs reaching the level of situational awareness and perception achieved by humans. As used in this disclosure, the term 'situational awareness' refers to the ability of a VAS to accurately determine the presence of hazards, and the risk of collision with such hazards in the vicinity of the vehicle controlled by the VAS.

In particular, VASs at present rely on unimodal sensors (i.e. line-of-sight) whereas humans assess their surroundings based on their natural multimodal sensing capacity (i.e. line-of-sight combined with non-line-of-sight). Thus, the present disclosure is directed towards improving VASs through improving multimodal sensor integration with VASs.

Acoustic sensors can be coupled to VASs to improve their situational awareness. Through the detection and analysis of acoustic data, the detection of events or hazards beyond the line of sight can be improved.

Similar to other sensor systems, the output from the acoustic sensor system may be coupled to one or more machine learning algorithms to analyse the sensor data and extract additional situational data from the sensor data. The one or more machine learning algorithms are preferably configured to run on one or more edge-based GPUs (Graphics Processing Units) or TPUs (Tensor Processing Units). As used in this disclosure the term 'edge-based' means that a component is located in or on the vehicle and not located remote from the vehicle.

Additionally, and as will be apparent to those skilled in the art, various processor hardware components, such as e.g. Field-Programmable Gate Arrays (FPGAs), Application-Specific Integrated Circuits (ASICs), etc. may also be used. The manufacturing costs can significantly vary based on the exact selection of hardware components and the way they are integrated. However, the expenses related to powering acoustic sensor systems have been found to be consistent-and substantially lower in comparison to line-of-sight sensor systems.

In addition to manufacturing costs of producing a sensor system, there are further costs associated with running a sensor system. For example, the more data produced by a sensor system, the more memory is required for data management, and the more processing is required to distill the data acquired into a usable output, which in turn increases the power consumption of the sensor system. A further issue with line-of sight sensors is that they generate a large amount of data. As the cost of manufacturing line-of-sight sensor systems such as cameras, radars, and even LiDAR decreases, the significance of the costs of processing, storing, and transmitting the extensive data they generate, especially in the case of LiDAR, become more pronounced. In ideal conditions, the costs associated with data management may be warranted. However, VASs typically operate in less than optimal environments. As a result, the effectiveness of visual sensor systems - and consequently, their value - significantly declines. For example, a camera's range of visibility can easily drop from 50 meters on a motorway to just 5 meters on a rural road, but without a corresponding reduction in the volume of data produced.

Acoustic sensor systems advantageously have lower initial hardware costs than their line-of-sight counterparts. Furthermore, acoustic sensor systems inherently have lower energy demands than line-of-sight sensors such as electromagnetic sensors. Thus, by integrating energy-and data-efficient acoustic sensing, industries involved in machine perception and vehicle automation systems can achieve substantial benefits. Furthermore, the use of acoustic sensor systems increases the safety of VASs.

Although acoustic sensing systems offer these notable benefits, their adoption remains limited. At least one reason for this is the lack of reliability and precision of the existing systems and methods configured to analyse acoustic signals for VASs. This is particularly a problem for safety-critical applications.

At present, there are a primarily two related, and sometimes interconnected, techniques used to extract information from audio signals using machine learning:
1. Acoustic Event Detection (AED): AED is a technique for identifying the presence or absence of specific entities through their associated sound signatures. For example, in the field of bioacoustics, detecting the distinct call of a cuckoo may signal the presence of this bird species within a given locale. The analysis can be further refined to categorise multiple entities simultaneously. This may be done by employing a predefined set of labels to distinguish between detected sounds (e.g., identifying the sounds of a cuckoo, crow, and sparrow, while noting the absence of swallows, owls, and pigeons).
2. Acoustic Scene Classification (ASC): ACS is a technique for categorising an entire acoustic environment based on the collective sound signatures present. For example, a soundscape comprising an assortment of sounds from birds, children playing, the hum of a lawnmower, and distant traffic noise may be categorised by a machine learning tool as originating from an urban park setting.

Typically, acoustic sensing (AED and ASC) is conducted asynchronously. This means that a pre-stored audio recording is processed after it has been recorded. Occasionally, these processes are executed in real-time. However, such real-time applications typically do not fall within safety-critical scenarios. At present acoustic sensing is applied to scenarios where the functionality required is relatively basic. For example, focusing on straightforward and very discernible tasks like detecting the sound of breaking glass in an otherwise quiet room, or to detecting specific anomalies such as in acoustic-emission testing, where the sensor's sole purpose is to monitor a particular sound characteristic indicative of equipment wear.

At present an acoustic signal is typically processed by a machine-learning system as follows:
1. Data Collection: The audio data is obtained using an audio sensor such as a microphone or one or more acoustic MEMs.
2. Pre-processing: The collected audio data is pre-processed to improve the quality and usability of the data for detection and classification. For example, the pre-processing applied to the collected audio data may include one or more of noise reduction, normalisation, or filtering to remove background noise.
3. Feature Extraction: In this step, relevant features are extracted from the pre-processed audio signals (the terms 'feature', 'audio feature' and 'acoustic feature' have been used interchangeably in the present disclosure). Relevant features may include one or more of time-domain features (e.g., zero-crossing rate, energy), frequency-domain features (e.g., spectral centroid, spectral flux), or others like Mel-frequency cepstral coefficients (MFCCs).
4. Feature Selection: In this step, one or more features extracted are selected. The selected features are used to classify events, so preferably the process used to select an extracted feature is configured to select the most useful features for classifying events. This step can involve techniques like principal component analysis (PCA) to reduce the dimensionality of the feature set while retaining the most critical information for classification.
5. Event Detection and/or Classification: In this step, a trained machine-learning model is used to detect signal traits in a feature that match labels mapped in the model's training phase. Any suitable known machine-learning model known in the art may be used. For example, models derived from neural networks (especially convolutional neural networks CNNs), support vector machines (SVM), decision trees, and k-nearest neighbours (KNN) are typically used.
6. Continuous Learning: Preferably, the machine learning system is updated with new data gained from its performance in real-world conditions. This can involve retraining models with new audio samples, such that the machine learning system is adapted to changing environments or that the machine learning system is adapted to recognise new categories of acoustic events.

As set out above, the systems which at present are used in acoustic sensing primarily focus on signal processing based on feature extraction. This results in a "signal-centric," feature analysis which maps individual features to individual categories which results in sub-optimal accuracy.

### Object:

As such, there is a need for improved sensor systems that can significantly help to increase the safety of both users of autonomous systems and passersby. In addition, there is a need to address the limitations of existing sensing solutions, particularly in overcoming the constraints of line-of-sight sensors, in order to mitigate risks associated with blind spots and obscured hazards.

### Summary

The present disclosure is directed to a method of audio analysis suitable for providing data to a vehicular automation system, VAS, the method comprising: obtaining a context of a VAS; obtaining one or more audio data streams from one or more audio sensors; extracting an audio feature from the one or more audio data streams; processing the audio feature with a neural network and a vector space model to determine a processing score of the audio feature, wherein: the processing of the audio feature is based on the processing score; the vector space model comprises a Human Audio Perception Model, HAPM; the HAPM is configured to mimic how an audio signal is perceived and processed by a human; and the method comprises using the HAPM to adjust the processing score of the feature based on the context of the VAS.

Preferably, the method further comprises obtaining line-of-sight or contextual data from the VAS and using the HAPM to adjust the processing score of the feature based on the data. The contextual data includes information such as weather conditions, VAS location, or the like.

Preferably, the HAPM comprises an Acoustic Signal Physics Model, ASPM and the processing score comprises a relevance score, the relevance score indicative of whether a feature is a foreground or background feature; and the method comprises using the ASPM to adjust the relevance score of a feature based on a determination of how the feature propagated from an audio source to the one or audio sensors based and the context of the VAS.

Preferably, the HAPM comprises an Ecological Auditory Dimension Model, EADM and the processing score comprises a relevance score, the relevance score indicative of whether a features is a foreground or background feature; the EADM is configured to mimic how a human perceives a sound; and the method comprises using the EADM to adjust the relevance score of a feature based on the context of the VAS.

Preferably, the HAPM comprises an Auditory Relevance Attention Model, ARAM and the processing score comprises a prioritisation score, the prioritisation score indicative of how urgently a feature needs to be processed; the ARAM is configured to mimic human attention-based tuning; and the method comprises using the ARAM to adjust the prioritisation score of a feature based on the context of the VAS.

Preferably, the HAPM comprises a Schema Auditory Experiential Model, SAEM and the processing score comprises a trend score, the trend score indicative of how unexpected a feature is based on previously processed features; the SAEM is configured to mimic how a human determines the context of a feature based on their experience; and the method comprises using the SAEM to adjust the trend score of a feature based on the context of the VAS.

Preferably, the method further comprises selecting a contextual template, wherein selecting the contextual template is based on the context of the VAS and the contextual template includes an expected soundscape for the context; comparing the feature to the features in the expected soundscape; and increasing the trend score of the feature if the feature does not match a feature in the expected soundscape.

Preferably, the method further comprises adjusting the contextual template based on the feature. Preferably, the method further comprises generating an alert if the processing score or the trend score of the feature is above a predetermined threshold.

Preferably, the method further comprises generating the vector space model. More preferably, generating the vector space model comprises obtaining alignment metadata for data entry to correlate data entries either by time or location.

Preferably, the alignment metadata comprises a timestamp for a data entry, or a geolocation for a data entry.

Preferably, using the HAPM to adjust the relevance, prioritisation, or trend score of a feature based on the context of the VAS comprising using the HAPM to provide one or more cross-modal attention weights to a vector, wherein the cross-modal weighting mimics the cross-modal attention of a human.

Preferably, the neural network comprises a Bayesian Neural Network. More preferably, the HAPM is processed using the Bayesian Neural Network, and the remainder of the vector space model is processed using a conventional neural network.

The present disclosure is also directed to a data processing system comprising means configured to perform any of the method steps set out above.

The present disclosure is also directed to a computer program comprising instructions which, when the program is executed by a data processing system, cause the data processing system to perform any of the method steps set out above.

The present disclosure is also directed towards a computer readable storage medium, or a computer readable data carrier, comprising instructions which, when the program is executed by a data processing system, cause the data processing system to perform any of the method steps set out above.

### Brief Description:

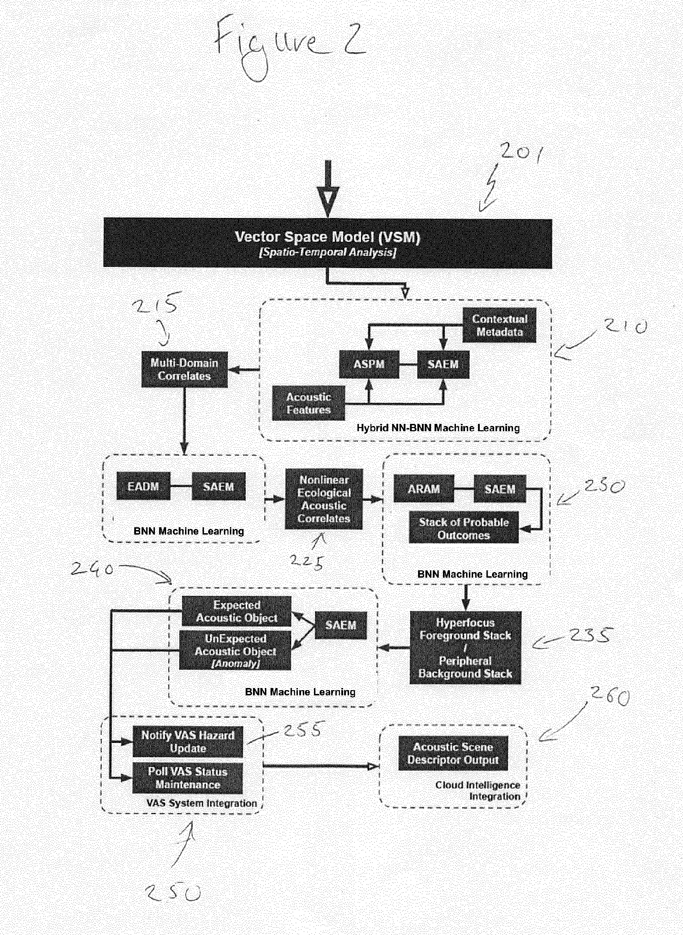

The invention will be more clearly understood from the following description of an embodiment thereof, given by way of example only, with reference to the accompanying drawings, in which:-
Figure 1 and figure 2 are flow charts showing the operation of a method according to the present disclosure;

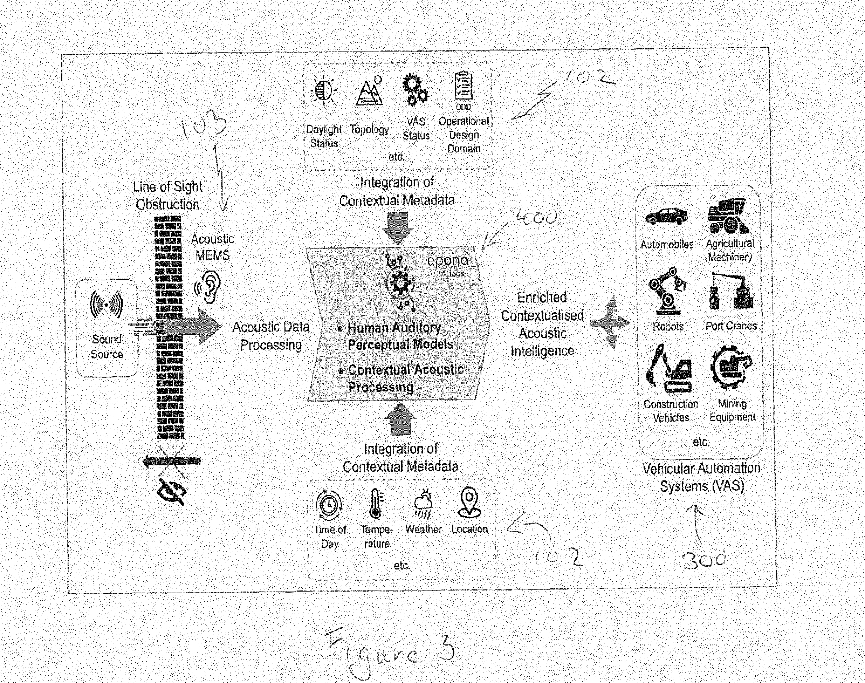

Figure 3 shows a system overview of a system in accordance with the present disclosure;

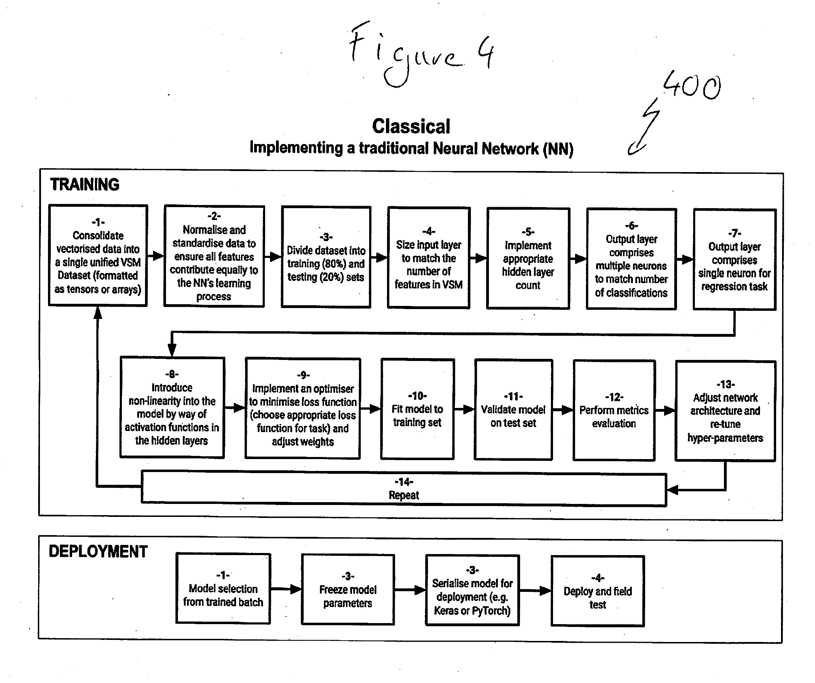

Figure 4 shows an implementation of a traditional neural network; and

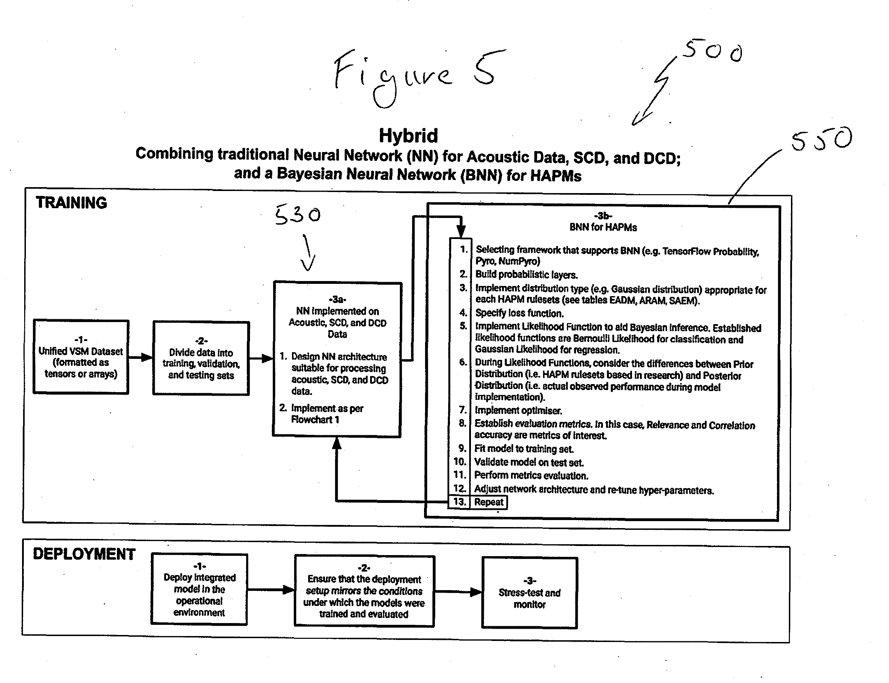

Figure 5 shows an implementation of a hybrid neural network.

### Detailed Description:

This present disclosure is directed towards systems and methods for an Acoustic Intelligence System (AIS). The AIS is designed to maintain contextual nuances in the relationships between acoustic features, which are lost in prior art solutions. As a result, metadata from the surrounding environment is maintained, which in turn increases the accuracy of an AIS of the present disclosure over existing solutions.

Thus, the use of an AIS results in improved acoustic data processing and improved contextual information. In particular, contextual metadata is used to determine how acoustic sensor information is processed. This provides a more relevant interpretation of environmental sounds for a VAS.

A Vector Space Model (VSM) 201 is preferably used to manage data. The method preferably also uses a Human Auditory Perceptual Model (HAPM) 101 to process data.

In contrast to prior art systems, a system according to the present disclosure 400 is configured to use contextual metadata 102 to determine a contextual setting. Contextual metadata 102 is data that provides information from the incoming data 103 received from a sensor suite of a VAS 300 and other relevant non-VAS sources 102. In particular, the contextual metadata 102 provides information about the context of a VAS. As used in the disclosure, the term context refers to the background information and relevant details that surround and describe a dataset. For example, contextual metadata 102 for a VAS could include data indicative of: weather conditions; VAS geolocation; traffic or traffic trends; environmental topologies; road surface conditions; user behaviour-models; VAS states; pre-established operational definitions as conferred by operational safety standards; etc. Contextual metadata 102 can be used in determining the relevance of sensor readings.

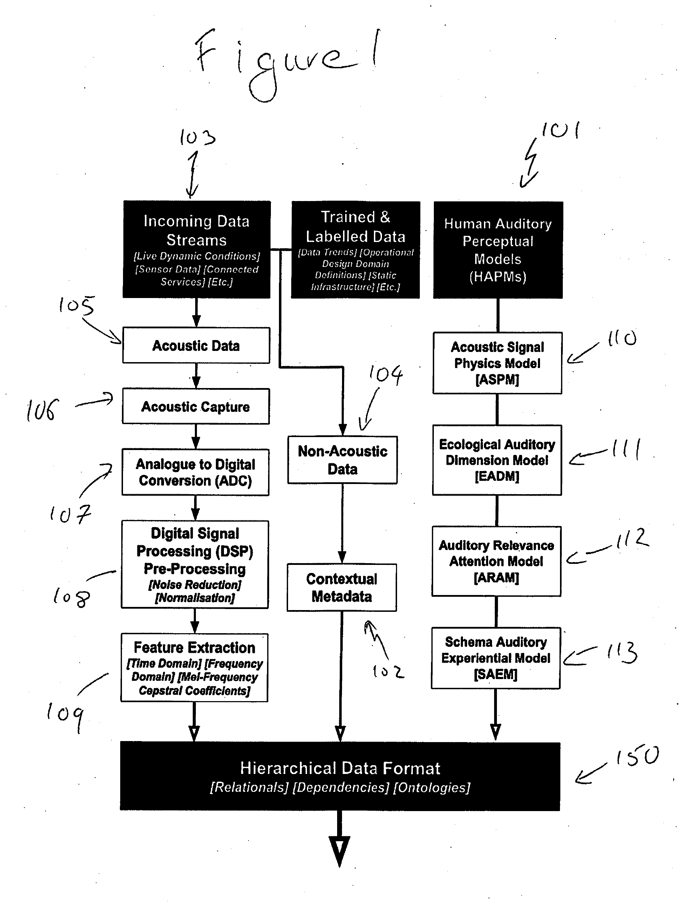

As shown in figure 1, in a first step incoming data 103 is captured. In conventional systems line-of-sight data 104 is typically captured using, LiDAR, radar, cameras, optical sensors, infrared sensors, etc. In this disclosure, audio data 105 is also captured 106 using an audio sensor (for example, using one or more microphones and/or acoustic MEMS). The audio data is processed as described below in more detail and stored in HDF 150.

Contextual metadata 102 is also included in the data. In the context of the present application, metadata is data that provides information about other data, but not the content of the data itself. In particular, metadata refers to situational metadata which is data that describes the conditions under which the real-time data is acquired. For example, the contextual metadata 102 could include data indicative of the time of day, geo-location, weather conditions, road conditions, light levels, velocity, etc. Contextual metadata 102 can be extracted or inferred from data collected by existing line-of-site sensors, local weather stations, mapped topology, and predefined VAS operational definitions presently used in the art.

The AIS stores non-acoustic contextual data (which may be data, metadata or both) describing the operational environment and conditions (i.e. the context) under which the AIS operates. Preferably, both static and dynamic contextual data 102 is stored. Preferably storage is in the same HDF 150 as that used for the audio data 103. This data is used to improve the processing of acoustic data analysed, increasing the accuracy of the output of the AIS provided to a VAS.

In this disclosure, static contextual data is data or metadata about a specific environment that remains unchanged over time or that undergoes infrequent changes at extended intervals. As such, static data may include data relating to an environment's predefined Operational Design Domain (ODD), infrastructure topology, network services, broader sensor ecosystem, etc. Thus, static contextual data is contextual data that remains unchanged for more than a predetermined period (e.g. 12 hours or more). Examples of static contextual data include data about road works, data about 5G small cells coming online, ODD regulation changes (such as changes to legal regulations), etc.

In this disclosure, dynamic contextual data is data or meta data about a given environment that changes rapidly or regularly over time. Thus, dynamic contextual data is contextual data that remains unchanged for less than a predetermined period. For example, dynamic data may include data about vehicle telemetry, weather conditions, time-of-day, the behaviour of other agents/entities in the environment, etc. As such dynamic contextual data is used to monitor changes such as another agent/entity making a sudden swerve (fractions of a second), fog slowly descending on a junction (minutes), or daylight slowly shifting from dusk to night (hours). Indeed, dynamic contextual data may change in under a second and in a timeframe in the region of nanoseconds.

For example, if an autonomous vehicle is navigating a rural road, the static data that might be stored is a description file of the rural road infrastructure. The static data may be stored in text format, which is preferably Terse Resource Description Framework Triple Language format (Turtle) such as, for example, ASAM OpenXOntology. An example syntax depicting the static rural road infrastructure is as follows:

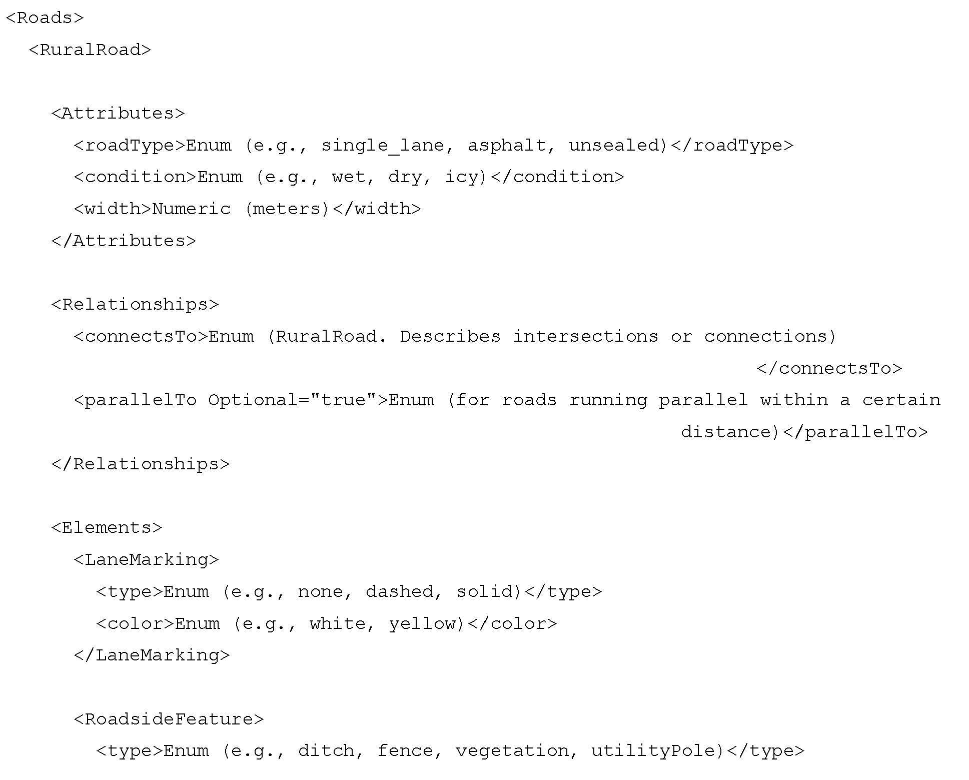

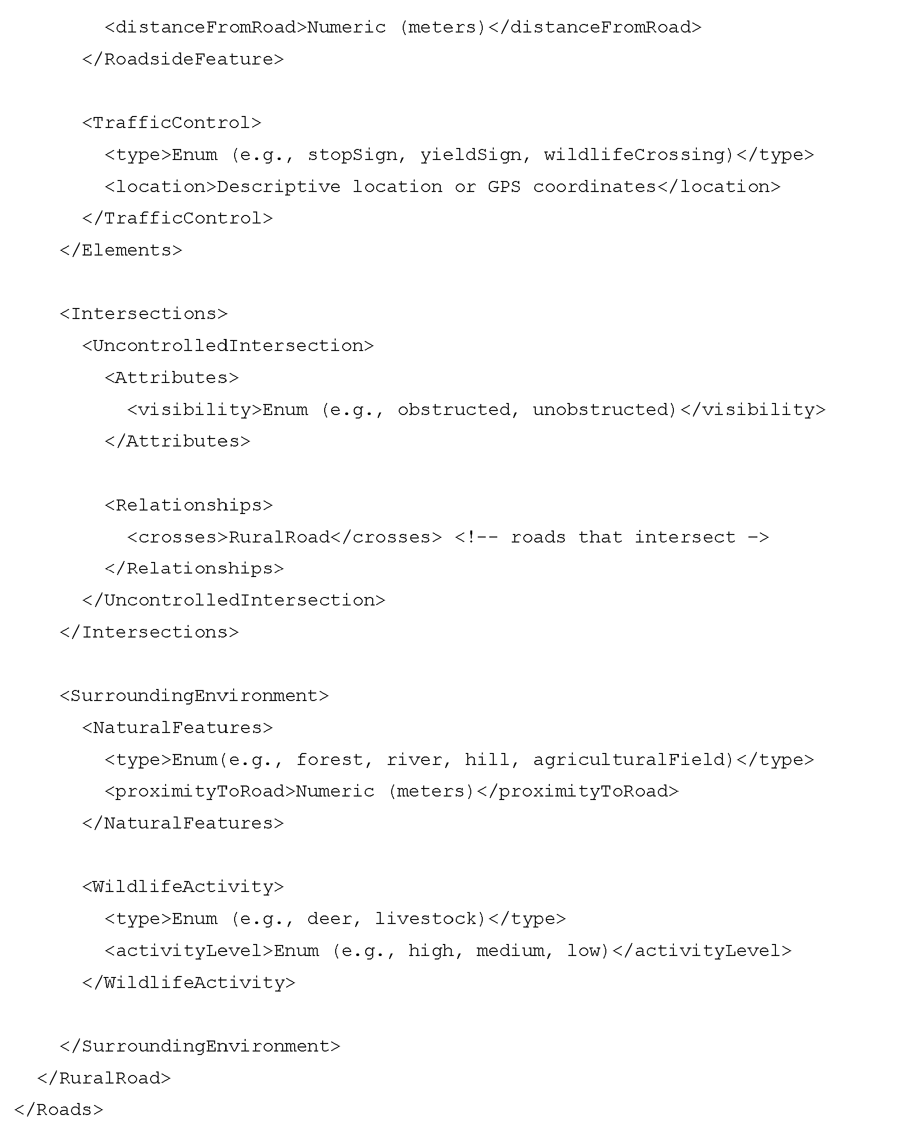

As will be apparent to those skilled in the art, the above example may be expanded or modified to include additional details relevant to a specific rural road scenario, such as bridges, specific types of roadside foliage, or other unique features. The text format can be extensively customised to accurately model the complexities of real-world structures.

Preferably, the descriptor information is translated and stored for use as in a hierarchical data format. A Hierarchical Data Format (HDF) is a set of file formats (such as e.g. HDF4 or HDF5) designed to store and organize large amounts of data. HDF files are particularly suitable for storing data models that can represent very complex data objects and a wide variety of metadata.

By way of example, the descriptor information may be translated and stored using a HDF framework is as follows (where 'I' signifies a level of nesting for a given entry):

```
 /RuralRoadInfrastructure (Root Group)
 |- Attributes:
 ||- creation_date: "YYYY-MM-DDTHH:MM:SSZ"
 ||- geographic_area: "Specific Area"
 ||- data_source: "Data Source Description"
 
 |-- /Roads (Group)
 ||-- Attributes:
 |||- description: "Contains data for individual roads."
 |
 ||-- /RuralRoad_001 (Subgroup)
 |||- Attributes:
 ||||- roadType: "asphalt"
 ||||- condition: "wet"
 ||||- width: 5.5 meters
 ||||- gps_coordinates: (Latitude, Longitude)
 ||||- creation_timestamp: "YYYY-MM-DDTHH:MM:SSZ"
 |||
 |||-- LaneMarkings (Dataset)
 ||||- Data Type: Compound {type: string, color: string, timestamp: string,
 gps_latitude: float, gps_longitude: float}
 |||
 |||-- RoadsideFeatures (Dataset)
 ||||- Data Type: Compound {type: string, distanceFromRoad: float, timestamp: string,
 gps_latitude: float, gps_longitude: float}
 |||
 |||-- TrafficControls (Dataset)
 ||||- Data Type: Compound {type: string, location: string, timestamp: string,
 gps_latitude: float, gps_longitude: float}
 |
 |-- /Intersections (Group)
 ||-- Attributes:
 |||- description: "Contains data for various intersections"
 |
 ||-- /UncontrolledIntersection_001 (Subgroup)
 |||- Attributes:
 ||||- visibility: "obstructed"
 ||||- gps_coordinates: (Latitude, Longitude)
 ||||- creation_timestamp: "YYYY-MM-DDTHH:MM:SSZ"
 |||
 ||||-- CrossingRoads (Dataset)
 ||||- Data Type: string[] (List of road IDs that intersect)
 |
 |-- /SurroundingEnvironment (Group)
 ||-- Attributes:
 |||- description: "Data on the environment surrounding the roads."
 |
 ||-- NaturalFeatures (Dataset)
 |||- Data Type: Compound {type: string, proximityToRoad: float, timestamp: string,
 gps_latitude: float, gps_longitude: float}
 |
 ||-- WildlifeActivity (Dataset)
 |||- Data Type: Compound {type: string, activityLevel: string, timestamp: string,
 gps_latitude: float, gps_longitude: float}
        
```

As those skilled in the art will appreciate, additional groups, data, and metadata can be added following the same structure as that set out above. The additional groups, data, and metadata can be used to describe other elements like bridges, tunnels, signage, and more detailed environmental data. HDF can be implemented using a variety of methods. For example, using the h5py package, which is a Pythonic interface to the HDF5 binary data format:

```
 import h5py
 import numpy as np
 from datetime import datetime
 
 def current_iso_timestamp():
     "Utility function to return the current timestamp in ISO 8601 format."
     return datetime.utcnow().strftime('%Y-%m-%dT%H:%M:%SZ')
 
     # Define custom data types for GPS coordinates and timestamps
     def gps_dtype():
     return np.dtype([
          ('latitude', np.float64),
          ('longitude', np.float64),
     ] )
 
     def timestamp_dtype():
     return h5py.string_dtype(encoding='ascii', length=20) # ISO 8601 format
 
     # Initialise data types
     gps_dt = gps_dtype()
     ts_dt = timestamp_dtype()
 
     # Create and populate the HDF5 file
     with h5py.File('rural_road_infrastructure.hdf5', 'w') as file:
     # Create the root group and add attributes
     rri = file.create_group('RuralRoadInfrastructure')
     rri.attrs['creation_date'] = current_iso_timestamp()
     rri.attrs['geographic_area'] = 'Kinsale, Co. Cork, Ireland'
     rri.attrs['data_source'] = 'Synthetic Example'
 
     # Example of a Roads group with a specific road subgroup
     roads_group = rri.create_group('Roads')
     road_001 = roads_group.create_group('RuralRoad_001')
     road_001.attrs['roadType'] = 'asphalt'
     road_001.attrs['condition'] = 'wet'
     road_001.attrs['width'] = 5.5
     road_001.attrs['gps_coordinates'] = np.array((51.7075, -8.5306), dtype=gps_dt)
     road_001.attrs['creation_timestamp'] = current_iso_timestamp()
 
     # LaneMarkings dataset
     lane_markings_type = np.dtype([
          ('type', 'S10'),
          ('color', 'S10'),
          ('timestamp', ts_dt),
          ('gps_latitude', np.float64),
          ('gps_longitude', np.float64),
     ])
     lane_markings_data = np.array([
          (b'solid', b'white', current_iso_timestamp(), 51.7075, -8.5306),
          (b'dashed', b'yellow', current_iso_timestamp(), 51.7075, -8.5306),
     ], dtype=lane_markings_type)
     road_001.create_dataset('LaneMarkings', data=lane_markings_data)
 
 # TrafficControls dataset
     traffic_controls_type = np.dtype([
          ('type', 'S20'),
          ('location', ts_dt),
          ('gps_latitude', np.float64),
          ('gps_longitude', np.float64),
          ('timestamp', ts_dt),
     ])
     traffic_controls_data = np.array([
          (b'stopSign', current_iso_timestamp(), 51.7075, -8.5306,
           current_iso_timestamp()),
     ], dtype=traffic_controls_type)
     road_001.create_dataset('TrafficControls', data=traffic_controls_data)
 
     # RoadsideFeatures dataset
     roadside_features_type = np.dtype([
          ('type', 'S20'),
          ('distanceFromRoad', np.float64),
          ('gps_latitude', np.float64),
          ('gps_longitude', np.float64),
          ('timestamp', ts_dt),
     ] )
     roadside _features _data = np.array([
          (b'farmGate', 2.0, 51.7075, -8.5306, current_iso_timestamp()),
     ], dtype=roadside_features_type)
     road_001.create_dataset('RoadsideFeatures', data=roadside_features_data)
 
     # Intersections group and datasets
     intersections = rri.create_group('Intersections')
     ui_001 = intersections.create_group('UncontrolledIntersection_001')
     ui_001.attrs['visibility'] = 'obstructed'
     ui_001.attrs['gps_coordinates'] = np.array((51.7076, -8.5307), dtype=gps_dt)
     ui_001.attrs['creation_timestamp'] = current_iso_timestamp()
 
     # SurroundingEnvironment group
     se = rri.create_group('SurroundingEnvironment')
     wildlife_activity_type = np.dtype([
          ('type', 'S20'),
          ('activityLevel', 'S10'),
          ('timestamp', ts_dt),
          ('gps_latitude', np.float64),
          ('gps_longitude', np.float64),
     ] )
     wildlife_activity_data = np.array([
          (b'fox', b'high', current_iso_timestamp(), 51.7077, -8.5308),
          (b'livestock', b'medium', current_iso_timestamp(), 51.7078, -8.5309),
     ], dtype=wildlife_activity_type)
     se.create_dataset('WildlifeActivity', data=wildlife_activity_data)
 
     # Note that this code is only a foundational example, and not all road elements
     # have been written out here.
```

By way of a further example, a HDF 150 entry for Dynamic Contextual Data may include weather data. As such, the HDF 150 could be implemented as follows (using the scenario of an autonomous vehicle navigating a road for ease of interpretation):

```
 /WeatherConditions (Root Group)
 |- Attributes:
 ||- data_collection_date: "YYYY-MM-DD"
 ||- geographic_location: "Latitude, Longitude, Elevation"
 ||- source _of _data: "Weather station ID"
 ||- weather_summary: "General weather conditions summary"
 
 |-- /Wet (Group)
 ||- Description: "Subgroups for Detailed Weather Data"
 
 ||-- /Precipitation (Subgroup)
 |||- Datasets:
 ||||- Intensity: "Precipitation intensity data over time"
 ||||- Type: "Type of precipitation (e.g., rain, sleet, snow)"
 |||- Attributes:
 ||||- Measurement units: "e.g., mm/hr for Intensity"
 ||||- Data resolution: "Time resolution of data collection"
 ||||- Collection method: "Method used for collecting precipitation data"
 
 ||-- /Humidity (Subgroup)
 |||- Datasets:
 ||||- RelativeHumidity: "Relative humidity data over time"
 |||- Attributes:
 ||||- Measurement units: "%"
 ||||- Data resolution: "Time resolution of data collection"
 ||||- Sensor specifications: "Details about the humidity sensor"
 
 ||-- /Temperature (Subgroup)
 |||- Datasets:
 ||||- AirTemperature: "Air temperature data over time, potentially split into Maximum,
 Minimum, and Average"
 |||- Attributes:
 ||||- Measurement units: "Degrees Celsius"
 ||||- Data resolution: "Time resolution of data collection"
 ||||- Collection method: "Method used for measuring temperature"
 
 ||-- /Wind (Subgroup)
 |||- Datasets:
 ||||- WindSpeed: "Wind speed data over time"
 ||||- WindDirection: "Wind direction data over time"
 |||- Attributes:
 ||||- Measurement units: "m/s for speed, degrees for direction"
 ||||- Data resolution: "Time resolution of data collection"
 ||||- Sensor specifications: "Details about the wind measurement instruments"
 
 ||-- /AtmosphericPressure (Subgroup)
 |||- Datasets:
 ||||- Pressure: "Atmospheric pressure data over time"
 |||- Attributes:
 ||||- Measurement units: "hPa"
 ||||- Data resolution: "Time resolution of data collection"
 ||||- Collection method: "Method used for measuring atmospheric pressure"
 
 ||-- /CloudCover (Subgroup)
 |||- Datasets:
 ||||- CloudCoverPercentage: "Cloud cover percentage over time"
 |||- Attributes:
 ||||- Measurement units: "%"
 ||||- Data resolution: "Time resolution of observation"
 ||||- Observation method: "Method used for determining cloud cover"
 
 ||-- /Visibility (Subgroup)
 |||- Datasets:
 ||||- VisibilityDistance: "Visibility distance data over time"
 |||- Attributes:
 ||||- Measurement units: "km"
 ||||- Data resolution: "Time resolution of data collection"
 ||||- Collection method: "Method used for measuring visibility"
 
 |-- /Metadata (Group)
 ||- Description: "Contains metadata about the dataset, including data collection
 methods, calibration information for instruments, and any data processing or quality
 control steps taken."
 
 |-- /AnalysisResults (Group)
 ||- Description: "This group stores results from data analyses, such as trends over
 time, statistical summaries, or event detection (e.g., onset of heavy rainfall)."
```

Similarly, the HDF 150 may be implemented using h5py.

After capture 106, an analogue audio signal is converted into a digital signal 107. The analogue to digital conversion 107 can be performed using standard sampling methods or hardware such as an analogue to digital converter (ADC). Preferably, the digital signal can then be passed through an initial processing step 108 to improve the quality of the signal. For example, noise reduction, normalization, or both can be performed on the digital signal. The initial processing step 108 may be performed using known digital signal processing (DSP) systems and methods.

Preferably, audio features in the digital audio signal are extracted 109. Audio features are quantifiable aspects of an audio signal at a given point in time. These can be time-domain or frequency domain aspects. For example, an audio feature can be one or more of: Zero Cross Rate, Energy, Entropy of Energy, Spectral Centroid, Spectral Spread, Spectral Entropy, Spectral Flux, Spectral Roll off, Mel-frequency cepstral coefficients (MFCC), Chroma Vector, or Chroma Deviation. Feature extraction can be performed using any suitable systems or methods known in the art.

Once features have been extracted 109 from the digital audio signal, they are preferably also stored for use in a hierarchical data format 150. As such the data representing the audio features 109 needs to be converted into HDF. This can be done using known Python libraries, audio-specific libraries (such as librosa), and libraries such as h5py. For example, if MFCC was used for feature extraction, the following HDF data may be extracted:

```
 /MFCC (Root Group)
 |- Description: "Root group for MFCC and related acoustic signal data."
 |-- /AcousticSignals (Group)
 ||- Description: "Group for storing the original acoustic signals or references to
 them."
 ||-- /Signal_001 (Dataset)
 |||- Attributes:
 ||||- Sampling rate: "Hz"
 ||||- Duration: "Seconds"
 ||||- Source: "Description of the audio source"
 ||||- Recording conditions: "Environment and conditions under which recording was
 made"
 ||||- Geolocation: "Latitude, Longitude"
 ||||- Network time synchrony: "Synchronization information with network time"
 |-- /Features (Group)
 ||- Description: "Group for the extracted MFCC features."
 ||-- /Feature_001 (Dataset)
 |||- Attributes:
 ||||- Number of mel bands: "The number of mel bands used in feature extraction"
 ||||- FFT window size: "Size of the FFT window, in samples"
 ||||- Hop length: "Hop length for FFT, in samples"
 ||||- Number of MFCC coefficients: "Number of MFCC coefficients extracted"
 |-- /Metadata (Group)
 ||- Description: "Group for additional metadata about the extraction process and
 analysis."
 ||-- /ExtractionParameters (Dataset or Attributes)
 |||- Description: "Details the parameters used in the MFCC extraction process."
 |||- Attributes (if using attributes instead of a dataset):
 ||||- Window size: "Size of the window for FFT, in samples"
 ||||- Hop size: "Hop size for FFT, in samples"
 ||||- Number of mel filters: "Number of mel-scale filters used"
 ||-- /AnalysisInformation (Dataset or Attributes)
 |||- Description: "Information about subsequent analysis, annotations, or
 classification results related to the MFCC features."
 |||- Attributes (if using attributes instead of a dataset):
 |||| - Analysis type: "Type of analysis performed"
 ||||- Annotations: "Annotations related to the signal or features"
 ||||- Classification results: "Results of any classification performed on the features
```

In addition, the data further includes Human Audio Perception Models (HAPMs) 101. According to the present disclosure, a HAPM is a model that represents how an audio signal is perceived and processed by a human. In particular, a HAPM is used to obtain weightings for a vector space model (VSM). These weightings define data interactions - both synergistic and antagonistic. Preferably, the HAPMs comprises four sub-models: an Acoustic Signal Physics Model (ASPM) 110, an Ecological Auditory Dimension Model (EADM) 111, an Auditory Relevance Attention Model (ARAM) 112, and a Schema Auditory Experiential Model (SAEM) 113.

Data about HAPMs 101 is also stored in HDF 150. For example, data about HAPMs 101 may be stored in the following HDF Groups:
1. Model Description Group: The model description group stores explanatory data about a sub-model, including its theoretical background, parameters descriptions, and versions.
2. Parameters Group: The parameters group is used to store parameters. These parameters are based on an analysis of how a human perceives sound and provide data which defines how the human auditory system processes a sound. For example, the parameters may include human auditory thresholds, reaction times, sensitivity indices, or other model-specific parameters. These parameters are related to the Results Group and Analysis Group and the parameters are used to adjust the weights in a sub-model.
3. Stimuli Group: The Stimuli Group stores data about inputs to a sub-model that may prompt a change in the behaviour of the sub-model or generate an output from the sub-model. The Stimuli group can contain sub-groups. For example, the Stimuli Group can comprise one or more of an Audio Data Group, a Static Context Data Group, or a Dynamic Contextual Data group.
   The Audio Data Group stores data about acoustic information. This may include one or more of raw audio data, pre-processed audio data, or data about extracted features. The Static Contextual Data (SCD) Group stores static contextual data (for example, data about road infrastructure features). The Dynamic Contextual Data (DCD) Group stores dynamic contextual data (for example data about weather features).
4. Results Group: The results group is used to store data about simulations or experimental runs of a sub-model. This data can be used during training. This data can include phases, including perceptual responses, cognitive assessments, error rates, or any other metrics of interest. The results group is preferably organised into subgroups based on different experimental conditions or simulation scenarios.
5. Analysis Group: The analysis group is used to store data obtained from sub-model training. For example, this data may include processed data output by a sub-model, statistical data, or visualisation data. The statistical data may include data summarised statistics, data indicative of comparison across conditions, and data about inferential statistical tests.

An example structure of the HAPM is as follows:

```
 /HAPMs (Root Group)
 |- Description: "Root group for Human Auditory Perception Models (HAPMs) data."
 
 |-- /ModelDescription (Group)
 ||- Description: "Group containing descriptions for each sub-model."
 |
 ||-- /Sub-Model_1 (Group)
 |||- Attributes:
 ||||- Theoretical Background: "Description of the theoretical basis for the model"
 |||| - Parameter Descriptions: "Descriptions of parameters used in the model"
 ||||- Version: "Model version identifier"
 
 ||-- /ParameterGroup (Group)
 |||- Description: "Parameters relevant to human auditory thresholds and
 characteristics."
 |||-- /HumanAuditoryThresholds (Group)
 ||||- Attributes:
 |||||- Equal loudness contours: "Description or values"
 |||||- Just-noticeable difference: "Values or methodology"
 |||||- Reaction times: "Average or range"
 
 |-- /StimuliGroup (Group)
 ||- Description: "Group containing links to data used as stimuli in HAPM experiments."
 |
 ||-- /AcousticDataLink (Soft Link)
 |||- Target: "/AcousticData" (Link to Acoustic Data Group or Dataset)
 |
 ||-- /StaticContextualData (Soft Link)
 |||- Target: "/SCDDataset" (Link to Static Contextual Data Dataset)
 |
 ||-- /DynamicContextualData (Soft Link)
 |||- Target: "/DCDDataset" (Link to Dynamic Contextual Data Dataset)
 
 |-- /ResultsGroup (Group)
 ||- Description: "Group containing results from experiments or simulations using the
 HAPMs."
 |
 ||-- /Sub-Model_1 (Group)
 |||-- /Condition_1 (Group)
 ||||- Attributes:
 |||||- Perceptual responses: "Summary or detailed responses"
 |||||- Cognitive assessments: "Assessment results"
 |||||- Error rate: "Measured error rate in responses"
 |||||- Correlation tracking: "Correlation metrics"
 |||||- Relevance rate: "Metrics on the relevance of stimuli or conditions"
 
 |-- /AnalysisGroup (Group)
 ||- Description: "Group containing analysis results and statistics for each sub-
 model."
 |
 ||-- /Sub-Model_1 (Group)
 |||-- /SummaryStatistics_1 (Group)
 ||||- Attributes:
 |||||- Analysis methods: "Description of analysis methods used"
 |||||- Software used: "Software tools or versions used for analysis"
 |||||- Inferences: "Summary of inferences drawn from the analysis"
 |||||- Trends: "Identified trends in the data"
 |||||- Correlation weights: "Weights assigned to different correlations"
 |||||- Relevance weights: "Weights assigned to the relevance of different factors"
```

The ASPM 110 is a set of rules describing the physical interactions between an acoustic wave and the context of a VAS (such as e.g. its environment), thereby providing a model of how a sound wave will propagate from the source of the sound to an audio sensor. As these interactions significantly affect the characteristics of an acoustic signal reaching an audio sensor, the ASPM 110 is useful for determining the significance of a received sound feature. As such the output of data processed using the ASPM 110 will be based on correlations between the elements represented by non-acoustic data and acoustic data, due to the use of the non-acoustic data in determining context. The below table presents some examples of the types of interactions and their effects on the acoustic signal:

| Absorption | | |
|---|---|---|
| Description | Auditory Effect | |
| Absorption is the conversion of sound energy into heat, leading to a decrease in sound intensity as the wave travels through a medium. When reaching physical boundaries or other material obstacles, much of the airborne sound energy is absorbed by the solid material. | | - Attenuation of the signal amplitude, especially at higher frequencies. |
| | | - Changes in the spectral content of the signal over distance. |

| Reflection | | |
|---|---|---|
| Description | Auditory Effect | |
| Reflection occurs when an acoustic wave encounters a boundary or object that causes the wave to bounce back towards the source. | | - Sound focusing or defocusing, affecting the perceived loudness and directionality. |
| | | - Changes in the propagation path, influencing how sound is distributed in an environment. |

| Diffraction | | |
|---|---|---|
| Description | Auditory Effect | |
| Diffraction involves the bending and spreading of sound waves around obstacles or through openings. | | - Sound being heard even when the direct path is obstructed. |
| | | - Alterations in the shadow zones behind obstacles, affecting spatial distribution. |

| Scattering | | |
|---|---|---|
| Description | Auditory Effect | |
| Scattering is the dispersion of sound waves in multiple directions after encountering irregularities or particles within the medium. | | - Reduction in sound intensity and alterations in its directional characteristics. |
| | | - Potential changes in the spectral content due to frequency-dependent scattering |

| Doppler Effect | | |
|---|---|---|
| Description | Auditory Effect | |
| The Doppler effect is the change in frequency (and wavelength) of sound as observed by an observer moving relative to the source of the sound. | | - A shift in frequency for moving sources or observers, affecting perceived pitch. |
| | | - Useful for motion detection and characterization using sound. |

| Temperature Effects | | |
|---|---|---|
| Description | Auditory Effect | |
| Temperature variations affect the speed of sound in air, altering how sound waves propagate. | | - Changes in sound speed with temperature can influence refraction patterns and propagation distances. |
| | | - Affects synchronisation between signals arriving via different paths. |

| Humidity Effects | | |
|---|---|---|
| Description | Auditory Effect | |
| Humidity affects the absorption of sound, particularly at higher frequencies. | | - Increased absorption with higher humidity, leading to greater attenuation over distance. |
| | | - Slight changes in the speed of sound, affecting propagation characteristics. |

| Atmospheric Pressure | | |
|---|---|---|
| Description | Auditory Effect | |
| Variations in atmospheric pressure can affect the density of air and the speed of sound. | | - Changes in propagation speed and potentially the direction of sound waves. |
| | | - Influences on acoustic impedance, affecting reflection and transmission at boundaries. |

| Masking | | |
|---|---|---|
| Description | Auditory Effect | |
| Masking is a phenomenon where the threshold of audibility for one sound is raised due to the presence of another (masking) sound. | | - Makes certain sounds inaudible or alters their perceived loudness and clarity. |

Preferably, the ASPM 110 is also stored in HDF 150. For example, an ASPM 110 may be stored as follows:

```
/ASPM (Root Group)
 |- Attributes:
 ||- Model version: "Version number"
 ||- Descriptor of assumptions: "Key assumptions made within the model"
 ||- Overarching parameters: "Global parameters affecting the model"
 
 |-- /Absorption (Group)
 ||- Datasets:
 ||| - "Datasets for different frequencies, materials, and environmental conditions."
 ||- Attributes:
 ||| - Description of absorption coefficients, material properties, and environmental
 parameters
 
 |-- /Reflection (Group)
 ||- Datasets:
 ||| - "Datasets for surface characteristics, angle of incidence, reflected sound
 levels."
 ||- Attributes:
 ||| - Types of reflecting surfaces, measurement or simulation parameters
 
 |-- /Refraction (Group)
 ||- Datasets:
 ||| - "Datasets for sound speed profiles, refraction angles, affected sound paths."
 ||- Attributes:
 ||| - Temperature, pressure, humidity gradients causing refraction
 
 |-- /Diffraction (Group)
 ||- Datasets:
 ||| - "Datasets for diffracted sound levels, obstacle dimensions, wavelength."
 ||- Attributes:
 ||| - Obstacle characteristics, environmental context
 
 |-- /Scattering (Group)
 ||- Datasets:
 ||| - "Datasets for scattered sound levels, particle sizes, distribution."
 ||- Attributes:
 ||| - Types of scattering particles or surfaces, frequency dependence
 
 |-- /DopplerEffect (Group)
 ||- Datasets:
 ||| - "Datasets for frequency shifts, relative speeds, original frequencies."
 ||- Attributes:
 ||| - Moving source or observer details, direction of movement
 
 |-- /TemperatureEffects (Group)
 ||- Datasets:
 ||| - "Datasets for sound speed variations, temperature profiles."
 ||- Attributes:
 ||| - Environmental temperature conditions, measurement locations
 
 |-- /HumidityEffects (Group)
 ||- Datasets:
 ||| - "Datasets for absorption coefficients at various humidity levels."
 ||- Attributes:
 ||| - Relative humidity profiles, frequency range affected
 
 |-- /AtmosphericPressure (Group)
 ||- Datasets:
 ||| - "Datasets for sound speed variations, pressure profiles."
 ||- Attributes:
 ||| - Atmospheric pressure conditions, altitudinal variations
 
 |-- /Masking (Group)
 ||- Datasets:
 ||| - "Datasets for masked thresholds, masking sound levels, frequency bands."
 ||- Attributes:
 ||| - Types of masking (frequency/temporal), characteristics of the masking and masked
 sounds
 
 |-- /Metadata (Group)
 ||- Description: "Details about the model, data sources, assumptions, and linkages
 to Static and Dynamic Contextual Data (SCD and DCD)."
 
 |-- /Analysis (Group)
 ||- Description: "Stores results from applying the ASPM to specific scenarios or case
 studies, including interpretations and conclusions."
         
```

As a result, data processed using the ASPM 110 produces an output which accounts for the influence of physical context on the audio features. For example, occlusions may dampen signal amplitude, reducing the loudness of sounds as they reach the sensor, which has subsequent consequences for the other acoustic dimensions. Similarly, weather conditions - such as humidity, temperature, and wind - can affect the timbral qualities of sound, thereby altering its features. The ASPM 110 thus integrates these environmental and contextual factors from the VSM into the output provided by the AIS to the VSM.

The EADM 111 is a set of rules describing how a human perceives sound in a given context, thereby providing a model of the biases in human auditory perception. It is important to note that these biases arose in human hearing through evolution to help us survive through helping us make sense of complex acoustic information (such as e.g. the cocktail problem). The below table presents examples of some of the traits observed in ecological psychoacoustic studies.

| Rising vs. Falling Frequency and Amplitude | |
|---|---|
| Trait | Significance |
| Sounds with concurrent rises in frequency and amplitude are often perceived as more significant or alarming than those where frequency and amplitude fall. | This trait can be linked to how auditory systems prioritise certain sounds as potential signals of danger or interest. For example, in many species, calls that signal alarm or distress often have rising tones. |

| Temporal Resolution and Integration | |
|---|---|
| Trait | Significance |
| The auditory system has the ability to integrate sounds over time, which is crucial for understanding the relevance of acoustic signal as a function of more cues/information. However, this integration ability varies depending on the complexity and duration of sounds. | This is useful for speech perception, where the ability to integrate phonetic elements into coherent speech sounds underpins language understanding. This can be extended to time-varying non-speech sounds where sequential cues give a clearer picture of events compared to any discrete cue. |

| Loudness and Pitch Perception in Context | |
|---|---|
| Trait | Significance |
| The perceived loudness and pitch of a sound can be significantly influenced by the sounds surrounding it, known as the context effect. | This is useful for understanding how sounds are perceived in complex acoustic environments and influences the ability to focus on a single acoustic source in a noisy environment. An applied demonstration of this trait is the Cocktail Party Effect where a person can focus on a more distant conversation-of-interest despite competing conversations occurring closer to them. |

| Auditory Stream Segregation | |
|---|---|
| Trait | Significance |
| The auditory system's ability to segregate different sound sources into separate perceptual streams based on cues like frequency, location, and timbre. | This ability allows listeners to isolate a single acoustic source from background noise or to distinguish between different acoustic sources in the same location. |

| Directional Hearing and the Precedence Effect | |
|---|---|
| Trait | Significance |
| Humans can locate the direction of sounds with high accuracy, a trait enhanced by the precedence effect, where sounds arriving first at the ear dominate the perceived direction over later arrivals (echoes). This ability is often supported by other non-acoustic contextual cues. | This is useful for spatial orientation and navigating environments based on auditory cues. |

Preferably, the EADM 111 is also stored in HDF 150. For example, an EADM 111 may be stored in HDF 150 as set out below:

```
/EADM (Root Group)
 |- Attributes:
 ||- Model version: "Version number"
 ||- Descriptor of assumptions: "Key assumptions of the model"
 ||- Overarching parameters: "Global parameters affecting the model"

 |-- /FrequencyAmplitudeCharacteristics (Group)
 ||- Datasets:
 ||| - RisingPatterns: "Data on sounds with concurrent frequency and amplitude rises"
 ||| - FallingPatterns: "Data on sounds with concurrent frequency and amplitude falls"
 ||- Attributes:
 ||| - Descriptions: "Characteristics of the patterns"
 ||| - Contexts: "Situations in which the sounds occur"
 ||| - Perceptual effects: "Effects on auditory perception"

 |-- /TemporalResolution (Group)
 ||- Datasets:
 ||| - "Measurements or simulations of temporal integration capabilities under various
 conditions"
 || - Attributes:
 ||| - Parameters: "Defining the temporal window of integration"
 ||| - Relevant contexts: "Situations where temporal resolution is critical"
 
 |-- /ContextualEffects (Group)
 ||- Description: "Subgroups for different contextual effects on perception"
 |
 ||-- /LoudnessPerception (Subgroup)
 |||- Attributes:
 |||| - Experiment details: "Description of experiments on loudness perception"
 |||| - Conditions tested: "Various acoustic conditions tested"
 |
 ||-- /PitchPerception (Subgroup)
 |||- Attributes:
 |||| - Experiment details: "Description of experiments on pitch perception"
 |||| - Conditions tested: "Different sound levels and their effects on pitch
 constancy"
 
 |-- /StreamSegregation (Group)
 ||- Datasets:
 ||| - "Experiments and simulations on auditory stream segregation"
 ||- Attributes:
 ||| - Cues: "Used for segregation (frequency, location, timbre)"
 ||| - Contexts: "Situations where stream segregation is investigated"
 
 |-- /DirectionalHearing (Group) 
 ||- Datasets:
 ||| - "Data on sound localization and the precedence effect"
 ||- Attributes:
 ||| - Conditions: "Under which data were collected"
 ||| - Implications: "For spatial navigation"
 
 |-- /PitchLoudnessVariation (Group)
 ||- Datasets:
 ||| - "Comparative data on pitch constancy vs. loudness variation"
 |||- Attributes:
 ||| - Experimental setup: "Details of the experiments"
 ||| - Observed phenomena: "Notable observations from the studies"
 
 |-- /Metadata (Group)
 ||- Description: "Contains comprehensive metadata for the EADM model."
 ||- Attributes:
 ||| - Experimental setups: "Descriptions of the setups for various studies"
 ||| - Data collection methods: "Techniques used for gathering auditory data"
 III - Analytical techniques: "Methods used for analyzing the data"
 |-- /AnalysisResults (Group)
 ||- Description: "Stores results from applying the EADM to auditory perception
 studies."
 ||- Datasets:
 ||| - "Results of specific analyses"
 ||- Attributes:
 ||| - Descriptions: "What each analysis entailed"
 ||| - Key findings: "Important results from the analyses"
```

As such, audio data processed using the EADM 111 by the AIS results in an output from the AIS that better mimics human-like auditory processing. Thus, the AIS facilitates identifying sounds which are significant for operational safety and efficiency. By better emphasising potentially important sounds over others in a crowded or complex auditory environment, the AIS will more effectively detect potential hazards.

The ARAM 112 is a set of rules describing how a human focuses on acoustic information as a function of how relevant the acoustic information is in a given context, thereby providing a model of attention-based tuning in human auditory perception. Thus, the ARAM 112 is based on the understanding that not all sounds are treated equally in auditory perception. Instead, processing is dynamically allocated to sound sources based on their perceived relevance to a current context.

The below table presents some of these traits observed in auditory attention research.

| Selective Attention | |
|---|---|
| Description | Significance |
| The ability to focus on a specific sound source or stream while filtering out irrelevant background noise or other competing sounds. | Improves the understanding of acoustic signals in noisy environments and for tasks that require concentration on specific auditory input. |

| Divided Attention | |
|---|---|
| Description | Significance |
| The capacity to attend to multiple sounds or auditory tasks simultaneously. | Improves multitasking in auditory environments, such as driving while holding a conversation or monitoring different acoustic sources in a complex acoustic scene. |

| Spatial Attention | |
|---|---|
| Description | Significance |
| The ability to focus on sounds coming from a specific direction or spatial location. | Improves the localization of audio sources in a given context, which is important for one or more of navigation, identifying the location of potential threats, or engaging in social interactions. |

| Temporal Attention | |
|---|---|
| Description | Significance |
| The focus on sounds occurring at specific times or the ability to anticipate when important sounds will occur. | Improves one or more of processing rhythmic patterns in acoustic signals, understanding temporal cues in communication, or reacting to sounds that have critical timing, such as alarms or crashes. |

| Attentional Capture | |
|---|---|
| Description | Significance |
| The involuntary redirection of attention towards a particularly salient or unexpected sound. | Improves alerting and/or orienting responses to novel or potentially important stimuli in the environment, such as sudden sounds that might indicate danger. |

| Attentional Switching | |
|---|---|
| Description | Significance |
| The ability to shift focus from one sound or set of sounds to another. | Facilitates adaptation to changing auditory environments or switching focus in response to changing task demands or priorities |

| Cocktail Party Effect | |
|---|---|
| Description | Significance |
| The phenomenon where one can focus auditory attention on a single conversation/event in a noisy environment, filtering out other conversations and background noise. | Facilitates separating and processing speech from a mixture of sound sources. Although the primary research focus for the Cocktail Party Effect has been on speech, this phenomenon may be extended to non-speech acoustic events. |

| Auditory Streaming | |
|---|---|
| Description | Significance |
| The perceptual organisation of sounds into coherent streams based on acoustic characteristics such as pitch, timbre, and | Facilitates segregating different sound sources and understanding complex auditory scenes, such as distinguishing between construction |
| spatial location. | vehicles, humans, and impact sounds on a construction site. |

| Habituation | |
|---|---|
| Description | Significance |
| The process by which repeated exposure to the same sound decreases its ability to attract attention. | Facilitates filtering out repetitive or non-salient sounds from the environment, allowing for more efficient processing of novel or significant auditory information. |

Preferably, the ARAM 112 is also stored in HDF 150. For example, an ARAM 112 may be stored in HDF 150 as follows:

```
 /AuditoryAttention (Root Group)
 |- Attributes:
 ||- Creation date: "YYYY-MM-DD"
 ||- Version: "Model version or dataset version"
 ||- Description: "Overview of the auditory attention model and dataset scope"
 
 |-- /SelectiveAttention (Group)
 ||- Datasets:
 ||| - "Experiments, observations, or simulations detailing selective attention tasks"
 ||- Attributes:
 ||| - Parameters: "Defining the tasks, contexts, and conditions under which selective
 attention is measured"
 
 |-- /DividedAttention (Group)
 ||- Datasets:
 ||| - "Data on tasks that require attention to be divided among multiple auditory
 stimuli"
 ||- Attributes:
 III - Experimental conditions: "Description of conditions and task requirements"
 III - Participant information: "Details about the participants involved"
 
 |-- /SpatialAttention (Group)
 ||- Datasets:
 ||| - "Studies or experimental data on the ability to focus on sounds from specific
 directions"
 ||- Attributes:
 III - Spatial configurations: "Setup of spatial configurations used in studies"
 ||| - Types of sounds: "Description of sounds used and outcome measures"
 |-- /TemporalAttention (Group)
 ||- Datasets:
 ||| - "Data involving the timing of auditory stimuli and the listener's ability to
 attend to temporal cues"
 ||- Attributes:
 ||| - Temporal structures: "Information on the temporal structure of stimuli"
 
 |-- /AttentionalCapture (Group)
 ||- Datasets:
 III - "Instances where attention is involuntarily captured by certain sounds"
 ||- Attributes:
 ||| - Capturing stimuli characteristics: "Description of capturing stimuli"
 ||| - Context of occurrence: "Context and effects on ongoing tasks"
 
 |-- /AttentionalSwitching (Group)
 ||- Datasets:
 ||| - "Experiments measuring the ability to switch attention between different sounds
 or tasks"
 ||- Attributes:
 ||| - Switching criteria: "Criteria for attentional switching"
 III - Inter-stimulus intervals: "Intervals between stimuli"
 III - Task performance metrics: "Metrics used to assess performance"
 
 |-- /CocktailPartyEffect (Group)
 ||- Datasets:
 ||| - "Data on understanding acoustic cues in noisy environments"
 ||- Attributes:
 III - Noise types: "Descriptions of background noise types"
 III - Stimuli materials: "Materials used as stimuli in experiments"
 
 |-- /AuditoryStreaming (Group)
 ||- Datasets:
 ||| - "Studies on the segregation of complex acoustic signals into separate perceptual
 streams"
 ||- Attributes:
 ||| - Acoustic properties: "Properties of stimuli used"
 ||| - Assessment methods: "Methods for assessing stream segregation"
 
 |-- /Habituation (Group)
 ||- Datasets:
 ||| - "Data on the decreased response to repetitive or non-novel sounds over time"
 ||- Attributes:
 ||| - Repetitive stimuli: "Frequency and characteristics of stimuli"
 ||| - Habituation measures: "Measures used to assess habituation"
 |-- /Metadata (Group)
 ||- Description: "Comprehensive metadata about the dataset"
 ||- Attributes:
 ||| - Methodology: "Overview of methodologies used in data collection"
 III - Participant information: "Details on participants"
 III - Analytical techniques: "Techniques used in data analysis"
 
 |-- /AnalysisResults (Group)
 ||- Description: "Contains results from various analyses performed on the auditory
 attention data"
 ||- Datasets:
 ||| - "Specific analysis results, statistical tests, models, and interpretations"
 ||- Attributes:
 ||| - Analysis details: "Detailed descriptions of analyses and key findings"
```

As such, the ARAM 112 in use performs a filtering process on the captured acoustic features. This filtering process is influenced by a combination of factors, including for example the properties of an acoustic feature (e.g., volume, pitch, novelty), contextual expectations, or the current state of the VAS. As a result, a VAS using an ARAM 112 is configured to prioritise only the most relevant acoustic signals within the scene as identified by the EADM 111. This capability improves the situational awareness of a VAS equipped with ARAM 112. Further, the use of an ARAM 112 improves responsiveness and safety of a VAS.

In human hearing, auditory attention to a sound in a context is influenced by how a human perceives the sound in the context. Thus, there is a relationship between the output from the EADM 111 and the ARAM 112.

For example, processing a set of audio features with the EADM 111 will result in the audio features with increasing frequency or amplitude being emphasised over those with a decreasing frequency or amplitude. According to the ARAM 112, audio features with an increasing frequency or amplitude are sounds which are typically more important to process. In particular, sounds with an increasing frequency or amplitude often signal urgency or alarm (e.g., a car approaching). Thus, processing a set of audio features with the ARAM 112 will result in processing capacity being dynamically allocated to audio features with increasing frequency or amplitude. As such, the ARAM 112 will mimic an adaptive trait of humans that enhances the ability to respond to potential threats or important events in a given context, and preferably, the EADM 111 will assist in this process.

As a further example, if the AIS periodically receives a set of audio features at predetermined time intervals, processing these sets of audio features with the EADM 111 will result in related time-separated features being integrated - i.e. features relating to a siren will be grouped together. If these features are then processed by using the ARAM 112, the ARAM 112 will filter out background noise or intermittent distractions, focusing instead on coherent auditory stream. As such, by integrating features the EADM 111 improves the function of the ARAM 112 by assisting in the identification of sounds that are not background noise.

As a further example, a set of features processed with the EADM 111 will emphasise the amplitude of certain features based on their context. As a result, if the resultant features are to be processed by the ARAM 112, the emphasised features are more likely to be processed. For example, a relatively quiet sound might stand out and be processed in a silent context, whereas the sound might be ignored in a noisy context. Contextual effects help prioritise which sounds are relevant based on the current auditory context.

### 4. EADM: Masking Patterns

Masking can significantly impact what sounds are able to be attended to. Sounds that are masked by others, particularly in noisy environments, may not be perceived at all, directing attention only to sounds that are clear and unobscured. Understanding masking patterns helps in designing technologies that improve auditory attention in challenging listening situations.

As noted above, processing audio with the EADM 111 will result in related audio features being grouped together. This in turn will result in auditory stream segregation, where audio features related to one audio source will be separated from audio features related to another source. This facilitates the ARAM 112 in filtering the audio features based on relevance. In particular, by processing the resultant features provided by the EADM 111, the ARAM 112 is better able to process the audio features from an audio stream considered relevant while ignoring features from an audio stream which is considered not relevant.

If a plurality of audio sensors is used to obtain the audio data, the processing of the extracted audio features from these audio sensors with the EADM 111 will result in the provision of directional data. When processing the resultant features, the ARAM 112 can use the directional data to better process audio features originating from an area of interest and avoid the processing of sounds originating from areas which are not relevant. As a result, the ARAM 112 can mimic a human's directional hearing, which allows individuals to localise and focus on sound sources accurately and to focus attention spatially, to help better navigate environments and for spatially oriented tasks.

Further, by processing features using the EADM 111, the certain features will be enhanced by the precedence effect, which will further assist the ARAM 112 to process spatially relevant audio features.

The SAEM 113 are a set of rules which describe how to process sensory stimuli and contexts through the use of contextual templates. As such the SAEM 113 models how humans process and understand sensory stimuli and contexts through the use of mental templates or schemas. These stored contextual templates are preferably pre-recorded contexts which are stored in memory. A contextual template provides an expected soundscape for a given context.

In use, the SAEM 113 is configured to match audio features to a contextual template. As such, the SAEM 113 mimics how a human's brain, when encountering sounds, will attempt to match incoming auditory stimuli with existing schemas to interpret and understand the auditory stimuli more accurately and more efficiently.

As a result, processing audio features with the SAEM 113 provides a contextual template which most closely matches a context in which audio features were previously recorded. The below table describes some features of the SAEM 113:

| Schema Formation and Adaptation | |
|---|---|
| Description | Significance |
| A contextual template is formed based on exposure, preferably repeated, to specific sounds or auditory patterns. Over time, these templates become more refined and can adapt to incorporate new information or variations on familiar sounds. In machine learning (ML), these templates can be encoded into an AI model based on trial data. | This feature allows for the efficient processing of sounds by enabling quick recognition and understanding based on past experiences. It also allows for flexibility in recognizing and interpreting variations of known sounds. |

| Top-down Processing | |
|---|---|
| Description | Significance |
| Auditory templates facilitate top-down processing, which mimics how the brain uses existing metal templates to make sense of incoming auditory information. | Top-down processing facilitates determining the relevance of a set of audio features which appears ambiguous or incomplete for a given context based on the context and expectations. |
| This contrasts with bottom-up processing, which relies solely on the sensory input, on which many ML methodologies rely on. | This facilitates understanding audio features extracted from a noisy context. |

| Predictive Coding | |
|---|---|
| Description | Significance |
| Processing audio features with the SAEM results in predictive coding, wherein future audio features, yet to be detected by an audio sensor, can be predicted based on one or more existing audio templates. As such, the contextual template can be adjusted or changed based on the actual audio features received. | Predictive coding enhances the efficiency of auditory processing, reducing processing load by focusing processing on unexpected or novel audio features that do not match those predicted in an existing contextual template. |

| Error Correction and Learning | |
|---|---|
| Description | Significance |
| When incoming audio features do not match with those predicted in an existing contextual template, the discrepancy can lead to error signals that may be used to adapt the contextual template, thereby improving accuracy of audio feature prediction (and mimicking human learning). This process of error correction contributes to the dynamic updating and refinement of contextual templates. | Error correction and learning mechanisms ensure that contextual templates remain relevant and accurate, allowing for the continuous development of audio feature prediction and analysis over time. |

| Hierarchical Organisation | |
|---|---|
| Description | Significance |
| Contextual templates are preferably arranged in a hierarchy, in which a top-level general context may first be selected, followed by contextual templates of increasing levels of specificity. This mimics how a human brian is thought to organise audio contexts, ranging from simple contexts for basic sounds to more complex schemas for intricate auditory scenes. | The hierarchical organisation allows for the nested categorisation of sounds, facilitating obtaining increasingly detailed contextual templates improving the accuracy of the information provided by the AIS to the VAS. |

| Cross-modal Integration | |
|---|---|
| Description | Significance |
| A selected contextual template can facilitate integration of auditory information with inputs from other non-audio sensors. This facilitates providing more accurate contextual templates. | Cross-modal integration improves coordination of the data provided by different sensors, such as localising the source of an acoustic feature based on other non-acoustic data. |

| Influence on Attention and Memory | |
|---|---|
| Description | Significance |
| Contextual templates can facilitate identification of audio features that are novel or do not fit an existing contextual template. | This assists the ARAM is filtering audio features and in prioritising relevant audio features. |
| Further, contextual templates may also facilitate the memory encoding and retrieval of auditory data. | |

| Anomaly Detection | |
|---|---|
| Description | Significance |
| Anomaly detection refers to the process of identifying audio features that significantly differ from those present established contextual templates. These anomalies may be audio features that are entirely new to the AIS or audio features common in other contextual templates which have occurred in an unexpected context. | In use, the AIS uses the SAEM to constantly compare incoming audio features against existing contextual templates schemas. When an audio feature does not fit an existing contextual template or deviates from the expected characteristics of an audio feature of a known contextual template, it is flagged as an anomaly. |
| | This discrepancy may be used during processing of the audio feature by the ARAM, potentially leading to the formation of a new contextual template or the modification of an existing one to accommodate new audio data. |

Preferably, the SAEM 113 can be stored in HDF 150. For example, the SAEM 113 may be stored in HDF 150 as follows:

```
 /AuditorySchemaTheory (Root Group)
 |- Attributes:
 ||- General metadata: "Overview and purpose of the dataset"
 ||- Versioning: "Dataset version"
 ||- Description: "Description of the Schema Auditory Empirical Model (SAEM)"
 
 |-- /SchemaFormationAndAdaptation (Group)
 ||- Datasets:
 ||| - "Data on experiments or observations regarding how auditory schemas are formed
 and adapt over time"
 ||- Attributes:
 ||| - Experimental setups: "Descriptions of how the studies were conducted"
 ||| - Findings: "Summary of key findings related to schema formation and adaptation"
 
 |-- /TopDownProcessing (Group)
 ||- Datasets:
 ||| - "Instances demonstrating top-down processing in auditory perception"
 ||- Attributes:
 ||| - Contextual information: "Background context of the studies"
 III - Sound characteristics: "Characteristics of the sounds used in experiments"
 ||| - Implications for schema theory: "How the findings support or refine auditory
 schema theory"
 
 |-- /PredictiveCoding (Group)
 ||- Datasets:
 ||| - "Data supporting the predictive coding aspect of auditory schemas"
 ||- Attributes:
 ||| - Predictive mechanisms: "Details of the mechanisms tested"
 ||| - Sound stimuli: "Description of the stimuli used"
 ||| - Prediction accuracy rates: "Accuracy of the predictions made by the models or
 participants"
 
 |-- /ErrorCorrectionAndLearning (Group)
 ||- Datasets:
 ||| - "Observations and experiments on how error correction contributes to schema
 adaptation"
 ||- Attributes:
 ||| - Error types: "Types of errors detected"
 ||| - Adaptation rates: "How quickly adaptation occurred"
 ||| - Adaptation types: "Kinds of adaptations made in response to errors"
 
 |-- /HierarchicalOrganization (Group)
 ||- Datasets:
 III - "Studies demonstrating the hierarchical structure of auditory schemas"
 ||- Attributes:
 III - Hierarchy levels: "Levels of hierarchy observed in the schemas"
 ||| - Organisation criteria: "Criteria for hierarchical organization"
 ||| - Functional significance: "Significance of the hierarchical organization"
 
 |-- /CrossModalIntegration (Group)
 ||- Datasets:
 III - "Evidence for the integration of auditory information with other sensory
 modalities"
 ||- Attributes:
 III - Modalities involved: "Other sensory modalities integrated with auditory
 information"
 ||| - Integration mechanisms: "How integration is achieved"
 ||| - Impact on processing: "Impact of integration on auditory schema processing"
 
 |-- /InfluenceOnAttentionAndMemory (Group)
 ||- Datasets:
 ||| - "Data on how auditory schemas affect attentional focus and memory
 encoding/retrieval"
 ||- Attributes:
 ||| - Attentional paradigms: "Paradigms used to test the influence of schemas on
 attention"
 III - Schema model access rates: "Influence on access rates to schema models"
 
 |-- /AnomalyDetection (Group)
 ||- Datasets:
 ||| - "Instances and studies highlighting the detection of anomalies through schema
 comparison"
 ||- Attributes:
 ||| - Anomaly types: "Types of anomalies detected"
 ||| - Detection processes: "How anomalies are detected"
 ||| - Error rates: "Rates of error in anomaly detection"
 ||| - Time measures: "Time taken to detect anomalies"
 
 |-- /Metadata (Group)
 ||- Description: "Metadata for the entire dataset"
 ||- Attributes:
 ||| - Data collection methods: "How data was collected"
 III - Analytical techniques: "Techniques used to analyze the data"
 ||| - Theoretical implications: "Implications of the findings for auditory schema
 theory"
 
 |-- /AnalysisResults (Group)
 ||- Description: "Contains results from analyses performed on the auditory schema
 theory data"
 ||- Datasets:
 ||| - "Results of specific analyses"
 ||- Attributes:
 ||| - Analysis techniques: "Techniques used for analysis"
 ||| - Findings: "Key findings from the analyses"
 ||| - Interpretations: "Interpretations of the findings"
```

As noted above, contextual metadata 102 (such as time of day, location, weather data, VAS status, etc.) feeds into an AIS 400 in accordance with the present disclosure. This integration allows the system to determine a probability of an expected acoustic feature in a given context even when not yet present. For instance, if the SAEM 113 has selected a contextual template indicative of an urban context, the sound of traffic, distant sirens, and human babble on sidewalks would be expected. As a result, the AIS 400 will not be impacted by the sound of a distant siren or of humans. In contrast, if the SAEM 113 has selected a contextual template indicative of a motorway context, the relevance of a human generated sound (such as shouting) would be considered far more relevant and would impact on AIS 400 operation. Further, in a contextual template indicative of an urban context, if the sound of breaking glass is suddenly detected, the AIS 400 is notified of this anomaly, whereupon it is categorised as an unexpected acoustic object and subsequently providing an output that preferably forces VAS action. Through this anomaly categorisation process, the SAEM 113 mimics a human's continual experiential learning process. As such, an unexpected audio feature in a given context is logged so that the AIS's 113 contextual templates adapt and evolve.

By incorporating the use of a SAEM 113, the AIS 400 better utilises non-acoustic context and system history to predict and identify the relevance of audio features more accurately. Such an approach significantly improves the situational awareness and decision-making utility of the data provided from an AIS 400 to VASs, making them more adaptable and efficient in dynamically changing environments over time.

Preferably, the processing of audio features using the SAEM 113 affects the processing of audio features using the ARAM 112. In particular, audio features are filtered based on contextual templates. This advantageously mimics human audio processing which is not solely dictated by audio sensory input received but is shaped by expectations, experiences, and predictions.

For example, the contextual templates of the SAEM 113 contain accumulated system history and (as such) predictive data about the audio features which are to be expected in a given context. This may include the type of audio sources, and their relevance to the context in question. This predictive data can be used as part of the processing of audio features using the ARAM 112 to filter incoming audio features that deviate from these predictions for processing, thus facilitating anomaly detection and increasing efficiency. Similarly, predictive data can be used as part of the processing of audio features using the ARAM 112 to filter an incoming audio feature such that the feature is ignored as background noise typical of a particular context if the audio feature fits well into a detailed contextual template associated with that context and the audio feature is not associated with a hazard or dangerous event.

Processing audio features with SAEM 113 contextual templates provides top-down processing which facilitates for rapid changes in operating contexts based on changing VAS data provided to an AIS 400 - such VAS data may be indicative of a user's operation goals or environmental cues. For instance, by providing VAS data as input to the AIS 400, the VAS data may be processed in conjunction with incoming audio features by the SAEM 113 to change from one contextual template to another. This would result in a change in how the ARAM filters audio features, as the filtering is based on the contextual template. As such, the significance of an audio feature shifts if that audio feature now signifies a potential hazard in a newly selected contextual template. For example, moving from an urban area with enclosed recreational areas into a residential area with no such facilities, the sound of a bouncing ball will increase in significance given its greater relevance in a context associated with children playing in close proximity to a road without the safety of a fenced off court.

Thus, by processing audio features using an EADM 111, ARAM 112, and SAEM 113 modules, the processing of audio features can mimic the non-linear complexities of human perception.

As a result, an AIS 400 according to the present disclosure will focus audio processing on audio features that are novel or contextually relevant. This top-down processing reduces the processing load, allowing an AIS to provide audio navigational data for complex auditory environments more quickly and efficiently.

This further facilitates in comparing the audio features expected in a given context with those received. In turn, this facilitates the detection of errors or novelties that might indicate important environmental changes (which might require a change of context) or new information (which might require the update of a contextual template).

Further, by using the SAEM 113 to process audio features, a contextual template may indicate specific optimal responses. As such, the AIS 400 will quickly identify audio features associated with danger or other significant states. This includes the speed at which a VAS equipped with an AIS 400 of the present disclosure can respond to hazards like a car crash in the path of a vehicle controlled by a VAS.

Preferably, the data, metadata, rules, and HAPM parameters for the AIS 400 are vectorised and stored in a vector space model 201 for use with a neural network. Any suitable known means for vectorisation may be used. Prior to vectorisation, data files may be split into smaller pieces called chunks by the chunking algorithm. Any suitable known chunking algorithm may be used. These chunks can then be embedded into the AIS 400 using a predetermined embedding model. Preferably, semantic relationships are retained. For example, given that the primary data types for AIS 400 are audio (acoustic data) and text (scene/event descriptors), embedding models such as OpenL3 for audio and BERT for text data may be used. The use of OpenL3 for audio and BERT is preferable, as they can be configured to retain semantic relationships.

Preferably, the AIS 400 preprocess data prior to vectorisation to include metadata useful for improving the results obtained from the vectorised data. Preferably, this metadata includes alignment metadata which can be used to correlate data during vectorisation. The alignment metadata could be used to correlate data either by time or location. For example, the AIS may timestamp or geolocate data (or both) from SCD, DCD, and audio features. Timestamping data ensures the efficient incorporation and maintenance of temporal relationships in the data being processed by the AIS. Geolocating data ensures the efficient incorporation and maintenance of spatial relationships in the data being processed by the AIS 400. Thus, the AIS 400 may provide a unified data reference for machine learning analysis. For example, preprocessing and vectorisation may include:

| **Spatial-Temporal Reference Data in SCD, DCD, Acoustic Features** | |
|---|---|
| **Temporal Features** | **Spatial Features** |
| Utilise absolute timestamps from a synchronised network time source (e.g. PTP) to capture all dynamic events (incl. acoustic features). | Employ GNSS data to align with predefined operational domains. |
| Encode cyclical times (e.g., time of day, day of the week) to reflect broader temporal contexts relevant to diurnal and seasonal changes. | Use GNSS for precise AIS sensor localisation within operational domains. |
| Allocate temporal reference data to designated Time Bins. | Allocate spatial reference data to corresponding Spatial Bins |
| Compute relative durations between Time Bin events to understand time-domain correlations. | Determine relative distances and bearings between Spatial Bin locations to identify key points of interest. |

| **Integrating Temporal and Spatial Features** | |
|---|---|
| Detect patterns in space-time, such as regular movements of agents. | |
| Perform velocity calculations based on sequential, timestamped geographic points. | |
| Normalise and standardise features to ensure dimensions are referencing along a common vector scale. | |

As noted above, the AIS 400 vectorises HAPM 101 parameter data. The HAPM 101 parameter data is also pre-processed prior to vectorisation. Vectorising may involve several steps, for example:

| **Numerical Encoding** | |
|---|---|
| Convert all model parameters into numerical values. For categorical parameters, encoding techniques such as one-hot encoding will be used. Continuous parameters will be directly normalised to ensure all parameters reference a common scale, which facilitates model integration. | |

| **Parameter Matrices** | **Contextual Parameter Reduction** |
|---|---|
| The numerical parameters will be organised into matrices or tensors given the HAPM's complex parameter interdependencies within and between HAPM sub-models. | Perform an initial contextual filter by way of adjusting trained model weights based on the temporal and spatial embeddings of incoming data. |

Preferably, audio data, contextual data 102 (such as SCD, DCD, etc.), and HAPM data are vectorised. As this data is cross-modal (i.e. it includes data from more than one type or 'mode' of data sensor (e.g. audio data, optical, line-of-sight, etc.), the vector database used to store the vectorised data preferably comprises some means of performing data fusion. Data fusion is the process of integrating multiple data sources to produce more consistent, accurate, and useful information than that provided by any individual data source.

In order to perform data fusion, differences between the significance of different modes of data in different contexts should be accounted for. In particular, a vectorised data entry is stored in transformer layers that comprise one or more cross-modal attention weights. This cross-model weighting is indicative of the importance of data from one mode of sensor over another. As such, the cross-modal weighting mimics the cross-modal attention of a human, which refers to the distribution of attention to different senses (where attention is the cognitive process of selectively emphasizing and ignoring sensory stimuli).

Cross-modal weighting models exist for text and image vector fusion, such as ViLBERT, as well as text and video vector fusion, such as Audio-Visual Scene-Aware Dialog (AVSD). The AIS 400 of the present disclosure offers a means for acoustic and scene-descriptor data fusion in the vector space 201 by utilising the HAPM 101.

The machine learning (ML) may be performed using either Classical ML 400 (which uses one or more Neural Networks) or Hybrid ML 500 (which uses a combination of one or more Neural Networks 530 and one or more Bayesian Neural Networks 550).

Both Classical ML 400 and Hybrid ML 500 use standard vector distance calculations to determine initial relationships between data, such as Euclidean distance, dot product, and cosine distance. However, Hybrid ML is configured to use Bayesian Neural Network (BNN) 50 uncertainty with the HAPM 101.

Classical ML 400 may use any suitable known neural network (NN), such as Convolutional Neural Networks (CNNs), Recurrent Neural Networks (RNNs), Long Short Term Memory (LSTM), etc.

Hybrid ML 500 combines a conventional Neural Network (NN) 530 for Acoustic Data, SCD, and DCD analytics, while using a Bayesian Neural Network (BNN) 550 for HAPM 101 modelling. This is advantageous as one or more BNNs 550 are particularly suitable for handling uncertainty and complexity, especially in human perception modelling, and conventional NNs 530 can be used for efficiently processing and classifying large volumes of sensory and contextual data.

A method of Hybrid ML 500 in accordance with the present disclosure may include the following steps:
1. Pre-processing and Vectorisation
   a. Temporal and Spatial Referencing: Incoming data, whether acoustic, SCD, or DCD, is tagged with temporal or spatial references (and preferably both) using timestamps, GNSS, or both.
   b. Vectorisation: Next, the data is transformed into a numerical format. This can be done using any suitable process, such as e.g. one-hot encoding for categorical data and normalisation for continuous data. Embedding models for text, such as BERT, and for acoustic data, such as OpenL3, may also be used. Vectorised data is then stored in a suitable structured format (e.g., matrices or tensors) compatible with ML models.
   c. Vector Fusion: fusion of the vector entries is implemented, using a cross-modal weightings derived from the HAPM 101.
   d. Distance Measures: Initial vector distances are calculated based on the vector entries.
   e. Contextual Parameter Reduction: An initial contextual filtering of the incoming data is performed by adjusting trained model weights. The adjustment of trained model weights is based on the temporal and spatial embeddings of incoming data.
2. Initial Neural Network Processing
   a. Conventional Neural Network Processing: The vectorised data is processed using conventional NNs. This processing is configured to process the acoustic data with reference to the SCD and DCD to extract features and patterns from the raw input.
3. Bayesian Neural Network (BNN) Processing
   a. ASPM and SAEM processing: The output from the conventional NNs is provided to a first pretrained BNN layer 210. The first pretrained BNN layer 210 is trained such that it is tuned to the ASPM 110 and SAEM 113. The use of the ASPM and SAEM results in the first pretrained BNN layer generating Multi-Domain correlations 215, providing a context to the acoustic signals that is based on physical and previously recorded correlations. Preferably, contextual time-stamped and geolocated information (e.g. SCD and DCD) are used to adjust the output from the first pretrained BNN layer.
   b. EADM and SAEM processing 220: The output 215 from the first pretrained BNN layer 210 is provided to a second pretrained BNN layer 220. The second pretrained BNN 220 is trained such that it is tuned to the EADM and SAEM. The use of the EADM and SAEM results in the BNN producing Non-Linear Ecological Acoustic Correlations 225. This step mimics a human's ecological dimension modelling, thereby increasing context.
   c. ARAM and SAEM Prioritisation 230: The output 225 from the second pretrained BNN layer 220 is provided to a third and a fourth pretrained BNN layer. The third pretrained BNN layer is trained such that it is tuned to the ARAM. The fourth pretrained BNN layer is trained such that it is tuned to the SAEM. As a result, the output from the third pretrained BNN layer is sorted into a Hyperfocus Foreground Stack for critical data and a Peripheral Background Stack 235 for secondary non-critical data, mimicking how humans prioritise auditory streams via human auditory attention.
   d. Contextual and Anomaly Analysis 240: Using the fourth pretrained BNN layer 240, the AIS is configured to determine if an audio feature is present in a contextual template representing the 'expected soundscape' (accounting for a current operational/environmental context), or if the audio feature is an anomaly. This is used to improve the accuracy in determining the relevance or urgency of the audio feature.
7. VAS Alerts 250:
   a. If an audio feature is present in a contextual template representing the 'expected soundscape', it is provided to the AIS 400 as input data for normal processing.
   b. If an audio feature is an anomaly, it triggers an immediate alert 255 to the AIS 400. The AIS 400 is configured to perform additional processing (such as e.g. classifications, regression, and predictive analysis) to determine a response. Preferably, this is performed at the edge of the network, enabling real-time action.
8. Acoustic Scene Descriptor Generation 260:
   a. As noted above, if an anomaly is identified, this can be used to refine or generate a contextual template. In particular, the AIS generates acoustic context descriptors associated with the anomaly. The acoustic context descriptor is sent to one or more remote (i.e. cloud-based) servers. The one or more servers can be processed via any suitable asynchronous, offline, and/or distributed means. Thus, an anomaly can be used to further increase the accuracy and predictive capabilities of the AIS over time.

As such the Hybrid ML model is both Trained and Adapted. Preferably, the Hybrid ML is continuously trained using feedback from real-world operations and simulations. This training involves adjusting the weights and biases within both the NNs and BNNs, refining the models based on new data and insights. Preferably, through the AIS 400 iteratively generating and improving contextual templates, the Hybrid ML is adapted to changing environments and evolving data patterns. This ensures the AIS remains effective and accurate in its auditory perception modelling and decision-making processes over time.

## Claims

1. A method of audio analysis suitable for providing data to a vehicular automation system, VAS, the method comprising:
obtaining a context of a VAS;
obtaining one or more audio data streams from one or more audio sensors;
extracting an audio feature from the one or more audio data streams;
processing the audio feature with a neural network and a vector space model to determine a processing score of the audio feature, wherein:
the feature is processed based on the processing score;
the vector space model comprises a Human Audio Perception Model, HAPM;
the HAPM is configured to mimic how an audio signal is perceived and processed by a human; and
the method comprises using the HAPM to adjust the processing score of the feature based on the context of the VAS.

2. The method of claim 1 comprising obtaining line-of-sight data or contextual data from the VAS and using the HAPM to adjust the processing score of the feature based on the data.

3. The method of claim 1 or 2, wherein:
the HAPM comprises an Acoustic Signal Physics Model, ASPM and the processing score comprises a relevance score, the relevance score indicative of whether a feature is a foreground or background feature; and
the method comprises using the ASPM to adjust the relevance score of a feature based on a determination of how the feature propagated from an audio source to the one or audio sensors based and the context of the VAS.

4. The method of any preceding claim, wherein:
the HAPM comprises an Ecological Auditory Dimension Model, EADM and the processing score comprises a relevance score, the relevance score indicative of whether a feature is a foreground or background feature;
the EADM is configured to mimic how a human perceives a sound; and
the method comprises using the EADM to adjust the relevance score of a feature based on the context of the VAS.

5. The method of any preceding claim, wherein:
the HAPM comprises an Auditory Relevance Attention Model, ARAM and the processing score comprises a prioritisation score, the prioritisation score indicative of how urgently a feature needs to be processed;
the ARAM is configured to mimic human attention-based tuning; and
the method comprises using the ARAM to adjust the prioritisation score of a feature based on the context of the VAS.

6. The method of any preceding claim, wherein:
the HAPM comprises a Schema Auditory Experiential Model, SAEM and the processing score comprises a trend score, the trend score indicative of how unexpected a feature is based on previously processed features;
the SAEM is configured to mimic how a determines the relevance of a feature based on their experience; and
the method comprises using the SAEM to adjust the trend score of a feature based on the context of the VAS.

7. The method of claim 6 comprising:
selecting a contextual template, wherein selecting the contextual template is based on the context of the VAS and the contextual template includes an expected soundscape for the context;
comparing the feature to the features in the expected soundscape; and
increasing the trend score of the feature is the feature does not match a feature in the expected soundscape.

8. The method of claim 7, comprising adjusting the contextual template based on the feature.

9. The method of any preceding claim, comprising generating an alert if the processing score or the trend score of the feature is above a predetermined threshold.

10. The method of any preceding claim, comprising generating the vector space model.

11. The method of claim 10, wherein generating the vector space model comprises obtaining alignment metadata for data entry to correlate data entries either by time or location.

12. The method of claim 11, wherein the alignment metadata comprises a timestamp for a data entry, or a geolocation for a data entry.

13. The method of any one of claims 10 to 12, wherein using the HAPM to adjust the relevance of a feature based on the context of the VAS comprising using the HAPM to provide one or more cross-modal attention weights to a vector, wherein the cross-modal weighting mimics the cross-modal attention of a human.

14. The method of any preceding claim, wherein the neural network comprises a Bayesian Neural Network.

15. The method of claim 14, wherein the HAPM is processed using the Bayesian Neural Network, and the remainder of the vector space model is processed using a conventional neural network.

16. A data processing system comprising means configured to perform the steps of any preceding claim.

17. A computer program comprising instructions which, when the program is executed by a data processing system, cause the data processing system to perform the steps of any one of claims 1 to 15.

18. A computer readable storage medium, or a computer readable data carrier, comprising instructions which, when the program is executed by a data processing system, cause the data processing system to perform the steps of any one of claims 1 to 15.
